# FASCICULE DE BREVET EUROPEEN

(11) **EP 2 658 668 B1**
(45) Date de publication et mention de la délivrance du brevet: **14.01.2015**
(21) Numéro de dépôt: 11799729.6
(22) Date de dépôt: 23.12.2011
(51) Int. Cl.: B22F 9/20, G21C 3/60, C22C 43/00, C22C 1/04, C22C 28/00

(54) **PROCEDE DE PREPARATION D'UNE POUDRE D'UN ALLIAGE A BASE D'URANIUM ET DE MOLYBDENE**
VERFAHREN ZUR HERSTELLUNG EINES PULVERS EINER LEGIERUNG AUF DER BASIS VON URAN UND MOLYBDÄN
METHOD FOR PREPARING A POWDER OF AN ALLOY BASED ON URANIUM AND MOLYBDENUM

(30) Priorité: 28.12.2010 FR 1061320
(43) Date de publication de la demande: 06.11.2013
(73) Titulaire: Commissariat à l'Énergie Atomique et aux Énergies Alternatives, 75015 Paris (FR); Universite Rennes 1, 35065 Rennes Cedex (FR); Centre National de la Recherche Scientifique, 75016 Paris (FR)
(72) Inventeur: ALLENOU, Jérôme, F-22800 Le Vieux Bourg (FR); BROTHIER, Méryl, F-13090 Aix En Provence (FR); CHAROLLAIS, François, F-84530 Villelaure (FR); ILTIS, Xavière, F-04860 Pierrevert (FR); TOUGAIT, Olivier, F-35000 Rennes (FR); PASTUREL, Mathieu, F-35440 Montreuil Sur Ille (FR); NOEL, Henri, F-35235 Thorigne Fouillard (FR)
(74) Mandataire: Ahner, Philippe
(86) Numéro de dépôt international: PCT/EP2011/074009
(87) Numéro de publication internationale: WO 2012/089687

(56) Documents cités:
- GB-A- 2 330 448
- GB-A- 2 354 256
- JP-A- 6 258 477
- US-A- 4 584 184
- US-A- 5 978 432

## Description

### DOMAINE TECHNIQUE

La présente invention se rapporte à un procédé de préparation d'une poudre d'un alliage à base d'uranium et de molybdène en phase γ métastable et, en particulier d'un alliage binaire UMo ou d'un alliage ternaire UMoX où X représente un métal autre que l'uranium et le molybdène.

Elle se rapporte également à un procédé de fabrication d'un combustible nucléaire mettant en oeuvre ce procédé.

Une telle poudre d'alliage est, en effet, propre à entrer dans la fabrication de combustibles nucléaires et, notamment, de combustibles pour réacteurs nucléaires expérimentaux, plus connus sous le sigle MTR (de « **M**aterial **T**esting **R**eactor »), tels que le Réacteur Jules Horowitz (RJH) du CEA Cadarache, le Réacteur à Haut Flux (RHF) de l'Institut Laue-Langevin ou encore le réacteur à haut flux neutronique BR-2 du site de Mol en Belgique.

### ÉTAT DE LA TECHNIQUE ANTÉRIEURE

Jusque dans les années 1950, les combustibles dédiés aux MTR étaient essentiellement constitués d'alliages d'uranium et d'aluminium présentant une teneur massique en uranium 235 de 93% pour une charge spécifique de 1,2 g d'uranium par cm³.

A partir de 1977 et sous l'impulsion des Etats-Unis d'Amérique, un programme visant à réduire les risques de prolifération des armes nucléaires et, donc, à abaisser le taux d'enrichissement en uranium des combustibles dédiés aux MTR a été mis en place au niveau international. Il s'agit du programme RERTR (de « **R**educed **E**nrichment for **R**esearch and **T**est **R**eactor »).

Dès lors, la mise au point de nouveaux alliages d'uranium qui soient capables de servir de combustibles nucléaires dans des MTR tout en présentant une teneur massique en uranium 235 ne dépassant pas 20%, a donné lieu à de nombreuses études.

Ont ainsi été notamment étudiés les alliages à base d'uranium et de silicium et les alliages à base d'uranium et de molybdène. Ce dernier type d'alliage est celui qui présente les propriétés les plus intéressantes puisqu'il permet notamment d'atteindre une charge spécifique de 8,5 g d'uranium par cm³ d'âme combustible alors que cette charge n'est au mieux que de 4,8 g d'uranium par cm³ pour les siliciures d'uranium.

Pour la préparation de poudres d'alliages d'uranium et de molybdène en phase γ métastable, il a été proposé à ce jour un certain nombre de procédés que l'on peut regrouper en trois grands types.

Les procédés du premier type sont dits par *« fusion-atomisation* » et consistent à faire fondre de l'uranium métal et du molybdène à une température supérieure à 1150°C dans un creuset réfractaire, qui est situé dans une chambre mise sous vide, puis à verser la masse fondue sur un disque tournant que comporte la chambre alors que simultanément est introduit un gaz de refroidissement (argon ou hélium) dans cette chambre.

Sous l'effet de la force centrifuge du disque tournant, la masse fondue est projetée sous la forme de gouttelettes sur les parois de la chambre. Ces gouttelettes sont immédiatement solidifiées par le gaz de refroidissement en une phase γ métastable, cette phase γ étant, des 3 phases allotropiques de l'uranium (à savoir α, β et γ), celle qui se comporte de manière satisfaisante sous irradiation avec notamment une bonne aptitude à solubiliser les gaz de fission.

Ces procédés, qui sont notamment décrits dans la demande de brevet français n° 2 777 688 **[1],** le brevet américain n° 5,978,432 **[2]** et la demande de brevet japonais n° 55-054508 **[3],** ne permettent pas de maîtriser la forme des particules des poudres obtenues ni la porosité intraparticulaire de ces poudres. Ainsi, les particules sont obligatoirement sphériques ou quasi sphériques (c'est-dire que le rapport entre leur dimension maximale (Dₘₐₓ) et leur dimension minimale (Dₘᵢₙ) est inférieur à 1, 1), tandis que la porosité intraparticulaire est, elle, inexistante.

Or, il n'est pas souhaitable que les particules des poudres d'alliages soient sphériques ou quasi sphériques car cela peut induire une ségrégation de particules fissiles au cours du laminage auquel sont soumis les éléments combustibles lors de leur fabrication, tout comme il n'est pas souhaitable que ces particules soient dénuées de toute porosité, une telle porosité permettant, en effet, d'assurer la présence dans le combustible de réservoirs tampons pour les gaz de fission et de retarder d'autant le gonflement de ce combustible en situation d'irradiation.

Au surplus, les particules des poudres d'alliages obtenues par ces procédés sont composées de grains dont la teneur en molybdène diffère du centre à la périphérie de ces grains.

Les procédés du deuxième type sont dits par *« fusion-fragmentation mécanique »* et consistent à former, à partir d'uranium métal et de molybdène, des lingots d'alliage UMo par fusion/solidification pour figer cet alliage en phase γ métastable, puis à transformer ces lingots en une poudre soit en les broyant (par exemple, par cryobroyage) soit en les usinant sous la forme de copeaux qui sont ensuite broyés.

Ces procédés ne permettent pas de maîtriser ni d'assurer la reproductibilité d'un certain nombre de caractéristiques présentées par les particules des poudres d'alliages obtenues, et en particulier la forme, la taille et la porosité intraparticulaire de ces particules.

Par ailleurs, les particules de ces poudres sont composées de grains présentant une microstructure à fort taux d'écrouissage, qui est donc *a priori* instable et susceptible d'évoluer fortement en situation d'irradiation.

Enfin, la fragmentation mécanique d'un alliage métallique solidifié est une opération difficile à mettre en oeuvre à une échelle industrielle et ce, d'autant plus qu'elle induit une réactivité accrue de l'alliage avec des risques d'oxydation et/ou de pollution de cet alliage par les équipements utilisés pour réaliser cette fragmentation (boulets de broyage par exemple).

Ce deuxième type de procédé est d'ailleurs généralement reconnu comme n'ayant pas d'avenir industriel.

Les procédés du troisième type sont dits par « *fusion-fragmentation chimique* » et se distinguent des procédés du deuxième type en ce que la réduction à l'état de poudres des lingots d'alliage d'uranium et de molybdène est réalisée par un traitement chimique et non par un traitement mécanique.

Ce traitement chimique, qui a notamment été décrit par Chen et al. dans Journal of Nuclear Materials, 400(1),62-72, 2010 **[4],** consiste à enlever tout d'abord la couche superficielle d'oxyde qui recouvre les lingots, à chauffer les lingots à une température de 500 à 650°C pour décomposer la phase γ métastable en phase α, puis à soumettre ces lingots à plusieurs cycles comprenant chacun une étape d'hydruration suivie d'une étape de déshydruration avant de les broyer sous une atmosphère d'argon. A l'issue de ce broyage, les particules de trop grosse taille sont éliminées par un tri, puis un traitement thermique d'homogénéisation est effectué, à une température supérieure à 900°C, pour re-stabiliser la poudre d'alliage en phase γ métastable.

Là également, ces procédés ne permettent pas de maîtriser et d'assurer une reproductibilité de la forme, de la taille et de la porosité intraparticulaire des particules des poudres obtenues. Ces procédés sont de plus contraignants sur le plan de la sécurité du fait de l'emploi d'hydrogène pour les étapes d'hydruration. Ils ont en outre l'inconvénient de comprendre un nombre important d'étapes et de nécessiter de travailler dans une atmosphère totalement épurée en oxygène.

Compte tenu de ce qui précède, les Inventeurs se sont donc fixé pour but de fournir un procédé qui permette de préparer une poudre d'un alliage à base d'uranium et de molybdène en phase γ métastable et qui, d'une manière générale, soit exempt des différents inconvénients présentés par les procédés proposés à ce jour pour la préparation d'une telle poudre.

Plus particulièrement, les Inventeurs se sont fixé pour but de fournir un procédé qui permette d'obtenir, de façon reproductible, une poudre d'un alliage à base d'uranium et de molybdène en phase γ métastable, dont les particules présentent des caractéristiques, notamment de forme, de taille, de porosité intraparticulaire et d'homogénéité de répartition du molybdène propres à faciliter la fabrication de combustibles nucléaires à partir de cette poudre et à optimiser le comportement de ces combustibles en situation d'irradiation et, en particulier, leur capacité à retenir les gaz de fission.

Ils se sont aussi fixé pour but que ce procédé réponde aux contraintes spécifiques à la mise en oeuvre de matières fissiles et notamment limite au mieux le risque de criticité ainsi que la production d'effluents liquides contaminés en matières fissiles et nécessitant donc d'être retraités.

Ils se sont en outre fixé pour but que ce procédé, tout en présentant les avantages précités, soit relativement simple à mettre en oeuvre et ait un coût compatible avec une exploitation à une échelle industrielle.

### EXPOSÉ DE L'INVENTION

Ces buts et d'autres encore sont atteints par la présente invention qui propose un procédé de préparation d'une poudre d'un alliage comprenant de l'uranium et du molybdène en phase γ métastable, lequel procédé comprend :
a) la mise en contact d'au moins un premier réactif choisi parmi les oxydes d'uranium et leurs mélanges, les fluorures d'uranium et leurs mélanges, avec un deuxième réactif consistant en du molybdène et un troisième réactif consistant en un métal réducteur, les premier, deuxième et troisième réactifs se présentant sous une forme divisée ;
b) la réaction des réactifs ainsi mis en contact à une température au moins égale à la température de fusion du troisième réactif et sous une atmosphère inerte, moyennant quoi cette réaction conduit à la formation de l'alliage comprenant de l'uranium et du molybdène sous la forme d'une poudre dont les particules sont recouvertes d'une couche d'oxyde ou de fluorure du métal réducteur ;
c) le refroidissement de la poudre ainsi formée à une vitesse au moins égale à 450°C/heure; et
d) l'élimination de la couche d'oxyde ou de fluorure du métal réducteur qui recouvre les particules de la poudre de l'alliage comprenant de l'uranium et du molybdène.

Conformément à l'invention, le premier réactif est, de préférence, un oxyde d'uranium dans lequel le nombre d'oxydation de l'uranium va de 4 à 6, c'est-à-dire un dioxyde d'uranium (UO₂), un trioxyde d'uranium (UO₃), un sesquioxyde d'uranium (U₃O₈), un tétraoxyde d'uranium (U₄O₉), ou un mélange de ceux-ci, que l'on utilise sous la forme d'une poudre.

Il peut, toutefois, également s'agir d'un fluorure d'uranium tel qu'un tétrafluorure d'uranium ou d'un mélange de fluorures d'uranium, se présentant également sous la forme d'une poudre.

Sachant que les dimensions des particules du premier réactif ont un impact sur la granulométrie de la poudre d'alliage qui se forme à l'étape b) et que l'on préfère que les particules de cette poudre d'alliage aient des dimensions (telles que déterminées par diffraction laser) allant de 20 à 100 µm, on utilise, de préférence, une poudre d'oxyde d'uranium dont les particules ont des dimensions (telles que déterminées par diffraction laser) allant de 1 à 100 µm et, mieux encore, de 5 à 50 µm.

Pour ce faire, la poudre d'oxyde d'uranium peut être soumise, préalablement à son utilisation, à un ou plusieurs tamisages permettant d'éliminer les particules de dimensions trop faibles ou trop élevées.

Par ailleurs, la poudre d'oxyde d'uranium peut également être soumise, préalablement à son utilisation, à un traitement du type étuvage, destiné à la débarrasser des éventuelles espèces chimiques (eau, oxyhydrates, ...) susceptibles de se trouver à la surface des particules de cette poudre et/ou à un traitement thermique tel qu'un traitement à une température de 600 à 1000°C, sous une atmosphère réductrice telle qu'une atmosphère composée d'un mélange d'argon et d'hydrogène, pour ramener la teneur en oxygène de cette poudre à la stoechiométrie par rapport à l'uranium.

De manière particulièrement préférée, le premier réactif est une poudre de dioxyde d'uranium dont la teneur en uranium 235 représente, de préférence, de 1 à 20% atomiques de la teneur totale en uranium de cette poudre, et que l'on a éventuellement préalablement traitée de manière à ce que son rapport stoechiométrique U/O soit égal à 2 ou sensiblement égal à 2.

Le deuxième réactif, à savoir le molybdène, est aussi, de préférence, utilisé sous la forme d'une poudre.

Là également, dans la mesure où les dimensions des particules de cette poudre ont un impact sur la granulométrie de la poudre d'alliage qui se forme à l'étape b), la poudre de molybdène est, de préférence, formée de particules dont les dimensions (telles que déterminées par diffraction laser) sont au plus égales à 250 µm et, mieux encore, vont de 5 à 150 µm.

Quant au troisième réactif, à savoir le métal réducteur, il est avantageusement choisi parmi les métaux alcalins (lithium, sodium, potassium, rubidium, césium et francium) et les métaux alcalino-terreux (béryllium, calcium, magnésium, strontium, baryum et radium).

Plus spécifiquement, on préfère que le troisième réactif soit un métal alcalino-terreux et, notamment, du magnésium ou du calcium, que l'on utilise soit sous la forme d'une poudre soit sous la forme de copeaux ou de tournures.

Conformément à l'invention, l'étape a) peut être réalisée en procédant à un simple mélange des premier, deuxième et troisième réactifs et en introduisant ensuite ce mélange dans l'enceinte de réaction dans laquelle il est prévu d'effectuer l'étape b). Auquel cas, le mélange des trois réactifs est, de préférence, effectué dans un mélangeur à poudres du type Turbula™, permettant de mélanger de façon intime des poudres de densités et de granulométries différentes sans induire une agglomération des particules formant ces poudres et, partant, une modification de leur granulométrie.

En variante, l'étape a) peut également être réalisée en déposant dans l'enceinte de réaction au moins une couche de pastilles constituées d'un mélange homogène des premier et deuxième réactifs (que l'on aura préalablement préparées, par exemple, en mélangeant ces deux réactifs dans un mélangeur à poudres du type Turbula™, puis en soumettant le mélange résultant à une compression uniaxiale) et au moins deux couches du troisième réactif, la couche de pastilles étant intercalée entre les deux couches du troisième réactif.

Dans tous les cas, les premier, les deuxième et troisième réactifs sont, de préférence, mis en contact dans des proportions permettant d'obtenir, à l'issue de l'étape b), une poudre d'un alliage présentant une teneur en molybdène conforme à celle désirée mais dans laquelle il n'y a plus d'uranium présent sous la forme d'oxyde ou de fluorure.

Ainsi, par exemple, dans le cas où le premier réactif est du dioxyde d'uranium tandis que le troisième réactif est du magnésium, la réaction qui se déroule à l'étape b) peut s'écrire selon le schéma simplifié suivant:

UO₂ + 2Mg + Mo → UMo + 2MgO.

Pour obtenir une poudre d'un alliage présentant une teneur massique en molybdène de 10%, on utilisera donc 1,22 g de dioxyde d'uranium et 0,12 g de molybdène et une quantité de magnésium au moins équivalente à la quantité théorique de magnésium qui est nécessaire pour réduire la totalité du dioxyde d'uranium (soit, dans le cas de la réaction mentionnée ci-dessus, 2 moles de magnésium pour 1 mole de dioxyde d'uranium).

Pour s'aménager une marge de sécurité et s'assurer d'une réduction totale du dioxyde d'uranium, il est possible d'utiliser un excès de magnésium correspondant au plus à deux fois la quantité théorique de magnésium nécessaire. Dans l'exemple précédent, la masse de magnésium susceptible d'être utilisée est alors de 0,4391 g de magnésium.

Conformément à l'invention, l'étape b) est, de préférence, réalisée dans une enceinte de réaction en molybdène pour éviter que la poudre d'alliage que l'on souhaite préparer ne soit contaminée par des éléments, notamment métalliques, provenant du matériau de cette enceinte.

Comme précédemment indiqué, l'étape b) est réalisée à une température égale ou supérieure à la température de fusion du troisième réactif, ce qui signifie que cette température sera, par exemple, au moins de 650°C si le troisième réactif est du magnésium et au moins de 842°C si le troisième réactif est du calcium.

En fait, dans le cadre de l'invention, on préfère que l'étape b) soit réalisée à une température égale ou supérieure à 900°C tout en étant inférieure à la température de fusion de l'alliage comprenant de l'uranium et du molybdène.

Typiquement, la température utilisée à l'étape b) est comprise entre 950 et 1150°C, une température idéale étant, par exemple, de 1100°C.

Par ailleurs, on préfère que cette température soit atteinte progressivement. Aussi, l'étape b) comprend-t-elle une montée en température, avantageusement de 50 à 200°C/heure.

On préfère de plus que l'étape b) soit réalisée sous une pression d'au plus 1 bar d'un gaz inerte ou d'un mélange de gaz inertes comme, par exemple, de l'argon ou un mélange d'azote et d'argon.

La durée de l'étape b) dépend de la température utilisée à cette étape et de la vitesse à laquelle cette température est atteinte. Ainsi, par exemple, à montée de température équivalente, 48 heures seront nécessaires pour une réaction effectuée à 950°C tandis que 24 heures suffiront pour une réaction effectuée à 1100°C.

Comme précédemment indiqué, l'étape c), qui est destinée à figer l'alliage comprenant de l'uranium et du molybdène en phase γ métastable, est réalisée en utilisant une vitesse de refroidissement égale ou supérieure à 450°C/heure.

Pour ce faire, l'enceinte de réaction est, de préférence, refroidie par immersion dans un fluide caloporteur, par exemple dans un bain d'eau ou dans un bain d'huile du type huile de silicone, maintenu à température ambiante ou à une température inférieure à celle-ci.

Conformément à l'invention, l'étape d) peut être réalisée de différentes façons.

Ainsi, il est notamment possible d'éliminer la couche qui recouvre les particules de la poudre d'alliage s'étant formée à l'étape b) (ainsi que l'excès de métal réducteur si celui-ci a été utilisé en excès) par dissolution de cette couche, par exemple en traitant cette poudre d'alliage par une phase aqueuse acide telle qu'une solution d'acide chlorhydrique, ou par une phase organique comprenant un ou plusieurs solvants comportant des groupes hydrogénés.

Toutefois, dans la mesure où cette façon de procéder, si elle est mise en oeuvre à une échelle industrielle, est susceptible, non seulement de poser des problèmes en termes de gestion du risque de criticité mais également de générer la production de volumes importants d'effluents liquides nécessitant d'être retraités, on préfère réaliser l'étape d) par broyage en lit fluidisé des particules de la poudre d'alliage obtenue à l'issue de l'étape c).

Un tel broyage permet, en effet, d'assurer à la fois une désolidarisation de la couche qui recouvre les particules d'alliage, un fractionnement de cette couche en fines particules par attrition et une séparation par élutriation des particules fines ainsi générées des particules d'alliage (lesdites particules fines étant, en effet, moins denses d'un facteur 3 à 4, voire plus, que les particules d'alliage) et ce, sans utiliser de phase liquide.

Conformément à l'invention, le broyage en lit fluidisé est préférentiellement, notamment dans le cas où la couche qui recouvre les particules de la poudre d'alliage est une couche d'oxyde, un broyage réactif, c'est-à-dire qu'il est effectué conjointement avec une réaction chimique.

Auquel cas on utilise comme gaz de fluidisation, un gaz capable de réagir avec la couche qui recouvre les particules et de favoriser, ainsi, le gonflement de cette couche, sa désolidarisation de l'alliage sous-jacent et son attrition.

Avantageusement, cette réaction chimique est une réaction de carbonatation que l'on réalise à une température allant préférentiellement de 150 à 475°C et en utilisant, comme gaz de fluidisation, du gaz carbonique ou un mélange de gaz carbonique et d'un gaz inerte et/ou de vapeur d'eau, la présence de vapeur d'eau permettant, en effet, d'accélérer la réaction de carbonatation.

Toutefois, comme la vapeur d'eau est susceptible de générer, en se condensant, un risque de criticité, il est préférable que cette vapeur d'eau ne représente pas plus de 10% volumiques du gaz de fluidisation. Typiquement, la teneur en vapeur d'eau du gaz de fluidisation va de 0,03% à 5% volumiques.

Le gaz de fluidisation est, de préférence, utilisé à une pression égale ou supérieure à 1 bar et, mieux encore, à une pression d'environ 10 bars, l'utilisation d'une telle pression permettant, en effet, d'accélérer la réaction chimique entre ce gaz et la couche qui recouvre les particules de la poudre d'alliage, et la séparation de cette couche de l'alliage sous-jacent.

Par ailleurs, le gaz de fluidisation est, de préférence, utilisé à une vitesse dite superficielle qui doit permettre de dépasser la vitesse dite terminale de chute libre des particules fines à éliminer sans atteindre la vitesse dite terminale de chute libre des particules d'alliage. La vitesse terminale de chute libre d'une particule donnée correspond à la vitesse maximale du gaz de fluidisation qui permet de maintenir cette particule en sustentation (c'est-à-dire en équilibre) à une côte verticale fixe dans le cas d'un écoulement vertical ascendant des particules. Cette vitesse est fonction de la taille de la particule, de sa densité et de sa morphologie.

Dans le cadre de l'invention, une telle vitesse superficielle est typiquement de 3 à 20 cm/s.

Pour favoriser la décohésion et la désolidarisation de la couche qui recouvre les particules de la poudre d'alliage, il est possible de recourir à des vibrations au sein du lit fluidisé, par exemple en équipant le réacteur dans lequel est mis en oeuvre ce lit fluidisé de cannes vibrantes ou de guides d'ondes.

En effet comme, par définition, le lit fluidisé se comporte macroscopiquement comme un fluide, le broyage des particules de la poudre d'alliage ne sera pas perturbé par la présence de dispositifs générant des vibrations dans ce lit et pourra même bénéficier ainsi de l'apport d'une source d'énergie supplémentaire propre à permettre une fragilisation de la couche qui recouvre les particules de la poudre d'alliage sans modifier pour autant les caractéristiques de ces particules.

Par ailleurs, pour favoriser la décohésion et la désolidarisation de la couche qui recouvre les particules de la poudre d'alliage, il est également possible de soumettre le lit fluidisé à des chocs thermiques, par exemple en alimentant ce lit en gaz de fluidisation selon une succession de cycles comprenant chacun une première période pendant laquelle le gaz de fluidisation est à une température de 250 à 400°C suivie d'une deuxième période, d'une durée plus courte que celle de la première période, pendant laquelle le gaz de fluidisation est à une température inférieure d'au moins 100°C à la température que ce gaz présente pendant la première période. Ceci est rendu très pertinent par le fait que communément, les lits fluidisés sont considérés comme d'excellents échangeurs thermiques gaz/solide.

Conformément à l'invention, le lit fluidisé est avantageusement un lit à jet. En effet, ce type de lit fluidisé est particulièrement bien adapté à la fluidisation de poudres de forte densité apparente, difficiles à fluidiser, et permet de plus d'optimiser les phénomènes de désolidarisation, d'attrition et de séparation par élutriation de la couche qui recouvre les particules de la poudre d'alliage.

Il est à noter que le broyage en lit fluidisé correspond à un mode de broyage relativement doux et permet donc, tout en éliminant très efficacement la couche qui recouvre les particules de la poudre d'alliage, de préserver globalement la morphologie et la granulométrie de ces particules.

Conformément à l'invention, la poudre de l'alliage à base d'uranium et comprenant du molybdène est de préférence :
- une poudre d'un alliage binaire UMo, c'est-à-dire d'un alliage uniquement constitué d'uranium et de molybdène, auquel cas le molybdène représente préférentiellement de 5 à 15% massiques et, mieux encore, de 7 à 10% massiques de cet alliage ; ou
- une poudre d'un alliage ternaire UMoX dans lequel X représente un métal différent de l'uranium et du molybdène, propre à améliorer encore le comportement des combustibles nucléaires sous irradiation, auquel cas le molybdène représente préférentiellement de 5 à 15% massiques et, mieux encore, de 7 à 10% massiques de cet alliage tandis que X, qui peut notamment être du titane, du zirconium, du chrome, du silicium, du niobium, du platine, de l'étain, du bismuth, du ruthénium ou du palladium, représente typiquement au plus 6% massiques de l'alliage et, mieux encore, au plus 4% massiques dudit alliage.

Pour réaliser une poudre d'un alliage ternaire UMoX par le procédé selon l'invention, il suffit d'ajouter le métal X sous une forme divisée aux réactifs utilisés à l'étape a), cet ajout pouvant notamment se faire en utilisant le métal X sous une forme dans laquelle il est déjà allié au molybdène.

Le procédé selon l'invention présente de nombreux avantages.

En effet, en premier lieu, il conduit à l'obtention de poudres d'alliage qui se caractérisent par des particules :
- dans lesquelles l'alliage est à 100% en phase cubique centrée, c'est-à-dire en phase γ métastable, avec un paramètre de maille de 3,417 Å ;
- dont les dimensions (telles que déterminées par diffraction laser) vont de 20 à 100 µm ;
- qui présentent un indice ou paramètre d'élongation (c'est-à-dire un rapport du diamètre de Féret maximal au diamètre de Féret minimal tel que déterminé à partir d'images de microscopie électronique ou optique en suivant la méthodologie décrite par C. Souchier dans « Analyse d'images », in Techniques de l'Ingénieur, Traité Analyse Chimique et Caractérisation, P855, 1-18, 1998 [5]) qui est compris entre 1,1 et 2 ; et
- qui présentent une valeur de porosité fermée (telle que déterminée à partir d'images de microscopie électronique à balayage, en coupes polies, conformément à la norme ASTM E1245-03) non nulle, qui représente au plus 5% (v/v) des particules et qui est constituée de pores dont la taille (c'est-à-dire le diamètre équivalent tel que déterminé à partir d'images de microscopie électronique ou optique comme décrit dans la référence **[5]** précitée) est au plus égale à 3 µm.

Par ailleurs, des analyses par microscopie électronique à balayage couplée à une analyse par spectrométrie à dispersion d'énergie montrent que le molybdène est réparti de façon homogène dans les grains formant ces particules puisque les variations de la teneur en molybdène au sein d'un même grain sont au plus de 1% massique.

Il en résulte que ces poudres d'alliages présentent des caractéristiques propres à faciliter la fabrication de combustibles nucléaires à partir de ces poudres et à optimiser le comportement de ces combustibles en situation d'irradiation et, en particulier, leur capacité à retenir les gaz de fission.

De plus, ce procédé :
- permet d'utiliser comme précurseurs de l'uranium entrant dans la composition de l'alliage, des poudres d'oxydes d'uranium ou de fluorures d'uranium qui sont des poudres classiquement fabriquées dans la filière des combustibles nucléaires et, donc, de permettre une valorisation de ces poudres ;
- permet de réaliser l'étape b), qui conduit à la formation de la poudre d'alliage, à une température inférieure à la température de fusion de cet alliage, ce qui permet de préserver les caractéristiques, notamment de forme, de dimensions et de porosité intraparticulaire, de la poudre obtenue ;
- permet de réaliser l'étape d), qui vise à éliminer la couche d'oxyde ou de fluorure du métal réducteur qui recouvre les particules de la poudre d'alliage, à une température inférieure à 500°C, ce qui permet de préserver la phase γ métastable dans laquelle se trouve l'alliage et ce, sans modifier de façon sensible la morphologie et la granulométrie des particules de la poudre d'alliage telle qu'obtenue à l'issue de l'étape b) ;
- permet de limiter au mieux le risque de criticité, notamment en permettant de réaliser l'étape d) sans utiliser une quelconque phase liquide aqueuse ou organique ; et
- permet de ne pas produire d'effluents liquides contaminés en matières fissiles.

Le procédé selon l'invention est donc particulièrement adapté à la préparation de poudres d'alliages à base d'uranium et de molybdène qui sont destinées à entrer dans la fabrication de combustibles nucléaires et, en particulier, de combustibles destinés à des MTR.

Aussi, l'invention a-t-elle également pour objet un procédé de fabrication d'un combustible nucléaire qui comprend la mise en oeuvre d'un procédé de préparation d'une poudre d'un alliage comprenant de l'uranium et du molybdène en phase γ métastable tel que précédemment défini.

Typiquement, dans le cadre de cette fabrication et comme bien connu dans l'état de la technique, la poudre de l'alliage comprenant de l'uranium et du molybdène en phase γ métastable est mélangée à une poudre d'aluminium ou d'un alliage à base d'aluminium pour constituer l'âme combustible puis, ce mélange est soumis à un laminage qui permet à la fois de le mettre sous forme de plaques et de le gainer.

D'autres caractéristiques et avantages de l'invention ressortiront du complément de description qui suit et qui se rapporte à des exemples de mise en oeuvre du procédé selon l'invention pour la préparation de poudres d'un alliage binaire UMo et d'un alliage ternaire UMoTi.

Il va de soi que ces exemples ne sont donnés qu'à titre d'illustrations de l'objet de l'invention et ne constituent en aucun cas une limitation de cet objet.

### EXPOSÉ DÉTAILLÉ DE MODES DE MISE EN OEUVRE PARTICULIERS

### Exemple 1 : Préparation d'une poudre d'un alliage binaire UMo

On prépare 100 g d'une poudre d'un alliage binaire UMo à 10% massique de molybdène de la façon suivante.

On fabrique, tout d'abord, des pastilles mesurant 12 mm de diamètre sur 2 mm d'épaisseur d'un mélange homogène U/Mo.

Pour ce faire, on mélange 102,1 g d'une poudre d'UO₂ (U/O ∼ 2), dont les particules ont des dimensions (telles que déterminées par diffraction laser) allant de 1 à 50 µm, avec 10 g d'une poudre de molybdène, dont les particules (telles que mesurées par diffraction laser) ont des dimensions allant de 1 à 150 micromètres, dans un mélangeur Turbula™ pendant 20 minutes et à une vitesse de 45 cycles/minute. Puis, on soumet ce mélange à une compression uniaxiale en appliquant une contrainte de 100 MPa.

Après quoi, on dépose dans un creuset en molybdène des couches de pastilles UO₂/Mo et des couches de copeaux de magnésium dont la plus grande dimension va de 1 à 3 mm, de sorte à former un empilement dans lequel chaque couche de pastilles UO₂/Mo est intercalée entre deux couches de copeaux de magnésium. La quantité de magnésium ainsi introduite dans le creuset est de 37 g environ.

On ferme ce creuset de façon étanche sous une légère pression, inférieure à 1 bar, d'argon. Puis, on le place dans un four que l'on chauffe à la vitesse de 150°C/heure jusqu'à atteindre la température de 1100°C. On laisse ensuite le creuset dans le four à cette température de sorte que le temps de séjour du creuset dans le four soit au total de 24 heures.

A l'issue de ce traitement, on refroidit le creuset à une vitesse de 1000°C/heure en l'immergeant dans un bain d'eau maintenu à température ambiante.

On récupère la poudre contenue dans le creuset et on la soumet à un broyage réactif dans un broyeur à lit fluidisé à jet en utilisant un mélange de CO₂ et de vapeur d'eau (98/2 v/v) comme gaz de fluidisation, une température de réaction de 450°C et une pression de 5 bars. La vitesse du mélange gazeux CO₂/vapeur d'eau en sortie du broyeur est de 12 cm/seconde.

On obtient ainsi 100 g d'une poudre d'un alliage UMo à 10% massique de molybdène et dont les particules sont totalement épurées en magnésium et en oxyde de magnésium.

### Exemple 2 : Préparation d'une poudre d'un alliage ternaire UMoTi

On prépare 100 g d'une poudre d'un alliage ternaire UMoTi à 9% massique de molybdène et à 1% massique de titane en suivant le même protocole opératoire que celui décrit dans l'exemple 1 ci-avant, à ceci près que l'on utilise 9 g de molybdène, 1 g de titane, le magnésium étant utilisé en excès (environ 37 g).

### REFERENCES CITEES

**[1]** FR 2 777 688
**[2]** US 5, 978, 432
**[3]** JP 55-054508
**[4]** Chen et al., Journal of Nuclear Materials, 400(1),62-72, 2010
**[5]** C. Souchier, « Analyse d'images », in Techniques de l'Ingénieur, Traité Analyse Chimique et Caractérisation, P855, 1-18, 1998
**[6]**US 5,978,432
**[7]**JP 06258477

## Revendications

1. Procédé de préparation d'une poudre d'un alliage à base d'uranium et comprenant du molybdène, en phase γ métastable, lequel procédé comprend :
a) la mise en contact d'au moins un premier réactif choisi parmi les oxydes d'uranium et leurs mélanges, les fluorures d'uranium et leurs mélanges, avec un deuxième réactif consistant en du molybdène et un troisième réactif consistant en un métal réducteur, les premier, deuxième et troisième réactifs se présentant sous une forme divisée ;
b) la réaction à une température au moins égale à la température de fusion du troisième réactif et sous une atmosphère inerte, des réactifs ainsi mis en contact, moyennant quoi cette réaction conduit à la formation de l'alliage à base d'uranium et comprenant du molybdène, sous la forme d'une poudre dont les particules sont recouvertes d'une couche d'oxyde ou de fluorure du métal réducteur ;
c) le refroidissement de la poudre ainsi formée à une vitesse au moins égale à 450°C/heure ; et
d) l'élimination de la couche d'oxyde ou de fluorure du métal réducteur qui recouvre les particules de la poudre de l'alliage à base d'uranium et comprenant du molybdène.

2. Procédé selon la revendication 1, dans lequel le premier réactif est une poudre d'oxyde d'uranium choisi parmi le dioxyde d'uranium, le trioxyde d'uranium, le sesquioxyde d'uranium, le tétraoxyde d'uranium et leurs mélanges.

3. Procédé selon la revendication 2, dans lequel la poudre d'oxyde d'uranium est formée de particules dont les dimensions vont de 1 à 100 µm, de préférence de 5 à 50 µm.

4. Procédé selon la revendication 2 ou la revendication 3, dans lequel la poudre d'oxyde d'uranium est une poudre de dioxyde d'uranium qui présente un rapport stoechiométrique U/O égal à 2 ou sensiblement égal à 2.

5. Procédé selon l'une quelconque des revendications précédentes, dans lequel le deuxième réactif se présente sous la forme d'une poudre dont les particules ont des dimensions inférieures à 250 µm, de préférence allant de 5 à 150 µm.

6. Procédé selon l'une quelconque des revendications précédentes, dans lequel le troisième réactif est choisi parmi les métaux alcalins et les métaux alcalino-terreux.

7. Procédé selon la revendication 6, dans lequel le troisième réactif est un métal alcalino-terreux que l'on utilise sous la forme d'une poudre, de copeaux ou de tournures.

8. Procédé selon l'une quelconque des revendications précédentes, dans lequel l'étape a) est réalisée en déposant dans une enceinte de réaction au moins une couche de pastilles constituées d'un mélange homogène des premier et deuxième réactifs et au moins deux couches du troisième réactif, la couche de pastilles étant intercalée entre les deux couches du troisième réactif.

9. Procédé selon l'une quelconque des revendications précédentes, dans lequel l'étape b) est réalisée à une température égale ou supérieure à 900°C mais inférieure à la température de fusion de l'alliage à base de l'uranium et comprenant du molybdène.

10. Procédé selon l'une quelconque des revendications précédentes, dans lequel l'étape d) est réalisée par broyage en lit fluidisé des particules de la poudre d'alliage obtenue à l'issue de l'étape c).

11. Procédé selon la revendication 10, dans lequel le broyage en lit fluidisé est réalisé conjointement avec une réaction chimique, de préférence une réaction de carbonatation.

12. Procédé selon la revendication 11, dans lequel la réaction chimique est une réaction de carbonatation qui est réalisée à une température de 150 à 475°C et en utilisant, comme gaz de fluidisation, du gaz carbonique ou un mélange de gaz carbonique et d'un gaz inerte et/ou de vapeur d'eau.

13. Procédé selon la revendication 12, dans lequel la vapeur d'eau représente au plus 10% volumiques du gaz de fluidisation, de préférence de 0,03% à 5% volumiques de ce gaz.

14. Procédé selon l'une quelconque des revendications 12 ou 13, dans lequel le gaz de fluidisation est utilisé à une pression supérieure à 1 bar absolu et à une vitesse allant de 3 à 20 cm/s.

15. Procédé selon l'une quelconque des revendications 10 à 14, dans lequel le réacteur dans lequel est mis en oeuvre le lit fluidisé est muni de dispositifs générant des vibrations dans ce lit, de préférence des cannes vibrantes ou des guides d'onde.

16. Procédé selon l'une quelconque des revendications 10 à 15, dans lequel l'étape d) est réalisée en utilisant le gaz de fluidisation selon une succession de cycles comprenant chacun une première période pendant laquelle le gaz de fluidisation est à une température de 250 à 400°C suivie d'une deuxième période, d'une durée plus courte que celle de la première période, pendant laquelle le gaz de fluidisation est à une température inférieure d'au moins 100°C à la température qu'il présente pendant la première période.

17. Procédé selon l'une quelconque des revendications précédentes, dans lequel la poudre de l'alliage à base d'uranium et comprenant du molybdène est une poudre d'un alliage binaire Umo, cet alliage présentant de préférence une teneur massique en molybdène de l'alliage binaire UMo de 5 à 15%.

18. Procédé selon l'une quelconque des revendications 1 à 16, dans lequel la poudre de l'alliage à base d'uranium et comprenant du molybdène est une poudre d'un alliage ternaire UMoX dans lequel X représente un métal autre que l'uranium et le molybdène, de préférence choisi parmi le titane, le zirconium, le chrome, le silicium, le niobium, le platine, l'étain, le bismuth, le ruthénium et le palladium.

19. Procédé selon la revendication 18, dans lequel la teneur massique en X de l'alliage ternaire UMoX est d'au plus 6%, de préférence d'au plus 4%.

20. Procédé de fabrication d'un combustible nucléaire, qui comprend la mise en oeuvre d'un procédé de préparation d'une poudre d'un alliage à base d'uranium et comprenant du molybdène, en phase γ métastable, tel que défini dans l'une quelconque des revendications 1 à 19.

## Patentansprüche

1. Verfahren zur Herstellung eines Molybdän umfassenden Pulvers aus einer Legierung auf Urangrundlage in metastabiler γ-Phase, wobei das Verfahren Folgendes umfasst:
a) In-Kontakt-Bringen wenigstens eines ersten Reaktanten, der aus Uranoxiden und Gemischen davon und Uranfluoriden und Gemischen davon ausgewählt ist, mit einem zweiten, aus Molybdän bestehenden Reaktanten und einem dritten Reaktanten, der aus einem reduzierenden Metall besteht, wobei die ersten, zweiten und dritten Reaktanten in verteilter Form vorliegen;
b) die Reaktion bei einer Temperatur mindestens gleich der Schmelztemperatur des dritten Reaktanten und in einer inerten Atmosphäre der auf diese Weise in Kontakt gebrachten Reaktanten, wodurch diese Reaktion zur Bildung einer Molybdän umfassenden Legierung auf Urangrundlage in Form eines Pulvers führt, dessen Teilchen mit einer Schicht aus einem Oxid oder Fluorid des reduzierenden Metalls überzogen sind;
c) Abkühlen des so gebildeten Pulvers mit einer Geschwindigkeit von mindestens 450 °C/Stunde und
d) Entfernen der Schicht aus dem Oxid oder Fluorid des reduzierenden Metalls, die die Teilchen des Pulvers aus einer Molybdän umfassenden Legierung auf Urangrundlage überzieht.

2. Verfahren gemäß Anspruch 1, bei dem der erste Reaktant ein aus Urandioxid, Urantrioxid, Uransesquioxid, Urantetraoxid und Gemischen davon ausgewähltes Uranoxidpulver ist.

3. Verfahren gemäß Anspruch 2, bei dem das Uranoxidpulver aus Teilchen gebildet wird, deren Abmessungen 1 bis 100 µm, vorzugsweise 5 bis 50 µm betragen.

4. Verfahren gemäß Anspruch 2, bei dem das Uranoxidpulver ein Urandioxidpulver ist, das ein stöchiometrisches U/O-Verhältnis von 2 oder im Wesentlichen 2 aufweist.

5. Verfahren gemäß einem der vorangehenden Ansprüche, bei dem der zweite Reaktant die Form eines Pulvers aufweist, dessen Teilchen Abmessungen unter 250 µm, vorzugsweise von 5 bis 150 µm aufweisen.

6. Verfahren gemäß einem der vorangehenden Ansprüche, bei dem der dritte Reaktant aus Alkalimetallen und Erdalkalimetallen ausgewählt ist.

7. Verfahren gemäß Anspruch 6, bei dem der dritte Reaktant ein Erdalkalimetall ist, das in Form eines Pulvers, von Spänen oder Drehspänen verwendet wird.

8. Verfahren gemäß einem der vorangehenden Ansprüche, bei dem Schritt a) durch Einbringen wenigstens einer Schicht aus Pellets, die sich aus einem homogenen Gemisch aus dem ersten und zweiten Reaktanten zusammensetzen, und wenigstens zweier Schichten aus dem dritten Reaktanten in ein Reaktionsgefäß ausgeführt wird, wobei die Schicht aus Pellets zwischen die beiden Schichten aus dem dritten Reaktanten eingeführt wird.

9. Verfahren gemäß einem der vorangehenden Ansprüche, bei dem Schritt b) bei einer Temperatur von 900 °C oder darüber, aber unter der Schmelztemperatur der Molybdän umfassenden Legierung auf Urangrundlage durchgeführt wird.

10. Verfahren gemäß einem der vorangehenden Ansprüche, bei dem Schritt d) durch Vermahlen der Teilchen aus dem am Ende von Schritt c) erhaltenen Legierungspulvers in einer Wirbelschicht durchgeführt wird.

11. Verfahren gemäß Anspruch 10, bei dem das Vermahlen in einer Wirbelschicht zusammen mit einer chemischen Reaktion, vorzugsweise einer Carbonatationsreaktion durchgeführt wird.

12. Verfahren gemäß Anspruch 11, bei dem die chemische Reaktion eine Carbonatationsreaktion ist, die bei einer Temperatur von 150 bis 475 °C und unter Verwenden von Kohlensäuregas oder eines Gemisches aus Kohlensäuregas und einem Inertgas und/oder Wasserdampf durchgeführt wird.

13. Verfahren gemäß Anspruch 12, bei dem der Wasserdampf höchstens 10 Vol.-% des Fluidisierungsgases, vorzugsweise 0,03 bis 5 Vol.-% des Fluidisierungsgases darstellt.

14. Verfahren gemäß einem der Ansprüche 12 oder 13, bei dem das Fluidisierungsgas bei einem Druck über 1 absoluten Bar und mit einer Geschwindigkeit von 3 bis 20 cm/s angewandt wird.

15. Verfahren gemäß einem der Ansprüche 10 bis 14, bei dem der Reaktor, in dem die Wirbelschicht eingesetzt wird, mit Vorrichtungen, die in dieser Wirbelschicht Vibrationen erzeugen, vorzugsweise Schwingungsstäben oder Wellenleitern, ausgestattet ist.

16. Verfahren gemäß einem der Ansprüche 10 bis 15, bei dem Schritt d) unter Verwenden des Fluidisierungsgases gemäß einer Abfolge von Kreisläufen angewendet wird, die jeweils einen ersten Zeitraum, während dessen sich das Fluidisierungsgas bei 250 bis 400 °C befindet, gefolgt von einem zweiten Zeitraum umfassen, dessen Dauer kürzer als die des ersten Zeitraums ist, während dessen sich das Fluidisierungsgas bei einer Temperatur unter wenigstens 100 °C der Temperatur befindet, die während des ersten Zeitraums herrscht.

17. Verfahren gemäß einem der vorangehenden Ansprüche, bei dem das Pulver aus einer Molybdän umfassenden Legierung auf Urangrundlage ein Pulver aus einer binären UMo-Legierung ist, wobei diese Legierung vorzugsweise einen Massenanteil von Molybdän an der binären UMo-Legierung von 5 bis 15 % aufweist.

18. Verfahren gemäß einem der Ansprüche 1 bis 16, bei dem das Pulver aus einer Molybdän umfassenden Legierung auf Urangrundlage ein Pulver aus einer ternären UMoX-Legierung ist, worin X ein anderes Metall als Uran und Molybdän darstellt und vorzugsweise aus Titan, Zirconium, Chrom, Silicium, Niob, Platin, Eisen, Bismut, Ruthenium und Palladium ausgewählt ist.

19. Verfahren gemäß Anspruch 18, bei dem der Massenanteil an X an der ternären UMoX-Legierung höchstens 6 %, vorzugsweise 4 % beträgt.

20. Verfahren zur Herstellung eines Kernbrennstoffs, das die Durchführung eines wie in einem der Ansprüche 1 bis 19 definierten Verfahrens zur Herstellung eines Pulvers aus einer Molybdän umfassenden Legierung auf Urangrundlage in metastabiler γ-Phase umfasst.

## Claims

1. Method for preparing a powder of an alloy based on uranium and comprising molybdenum, in a metastable γ phase, which method comprises:
a) putting at least one first reagent selected from uranium oxides and mixtures thereof, uranium fluorides and mixtures thereof, into contact with a second reagent consisting in molybdenum and a third reagent consisting in a reducing metal, the first, second and third reagents being in a divided form;
b) reacting the so contacted reagents at a temperature at least equal to the melting temperature of the third reagent and under an inert atmosphere, whereby this reaction leads to the formation of the alloy based on uranium and comprising molybdenum, in the form of a powder, the particles of which are covered with a reducing metal oxide or fluoride layer;
c) cooling the so formed powder at a rate at least equal to 450°C/hour;
and
d) removing the reducing metal oxide or fluoride layer which covers the particles of the powder of the alloy based on uranium and comprising molybdenum.

2. Method according to claim 1, wherein the first reagent is a powder of uranium oxide selected from uranium dioxide, uranium trioxide, uranium sesquioxide, uranium tetraoxide and mixtures thereof.

3. Method according to claim 2, wherein the uranium oxide powder is composed of particles, the dimensions of which range from 1 to 100 µm, preferably from 5 to 50 µm.

4. Method according to claim 2 or claim 3, wherein the uranium oxide powder is a powder of uranium dioxide which has a stoichiometric ratio U/O equal to 2 or substantially equal to 2.

5. Method according to any of the preceding claims, wherein the second reagent is in the form of a powder, the particles of which have dimensions of less than 250 µm, preferably ranging from 5 to 150 µm.

6. Method according to any of the preceding claims, wherein the third reagent is selected from alkaline metals and earth alkaline metals.

7. Method according to claim 6, wherein the third reagent is an earth alkaline metal which is used in the form of a powder, shavings or turnings.

8. Method according to any of the preceding claims, wherein step a) is carried out by depositing in a reaction enclosure at least one layer of pellets consisting of a homogeneous mixture of the first and second reagents and at least two layers of the third reagent, the layer of pellets being inserted between both layers of the third reagent.

9. Method according to any of the preceding claims, wherein step b) is carried out at a temperature equal to or greater than 900°C but less than the melting temperature of the alloy based on uranium and comprising molybdenum.

10. Method according to any of the preceding claims, wherein step d) is carried out by milling in a fluidized bed, the particles of the alloy powder obtained at the end of step c).

11. Method according to claim 10, wherein the milling in a fluidized bed is carried out jointly with a chemical reaction, preferably a carbonation reaction.

12. Method according to claim 11, wherein the carbonation reaction is conducted at a temperature from 150 to 475°C and by using as a fluidization gas, carbon dioxide gas or a mixture of carbon dioxide and of an inert gas and/or steam.

13. Method according to claim 12, wherein the steam represents at most 10% by volume of the fluidization gas, preferably from 0.03% to 5% by volume of this gas.

14. Method according to any of claims 12 or 13, wherein the fluidization gas is used at a pressure greater than 1 bar absolute and at a rate ranging from 3 to 20 cm/s.

15. Method according to any of claims 10 to 14, wherein the reactor in which is implemented the fluidized bed is provided with devices generating vibrations in this bed, preferably vibrating rods or wave guides.

16. Method according to any of claims 10 to 15, wherein step d) is carried out by using the fluidization gas according to a succession of cycles each comprising a first period during which the fluidization gas is at a temperature from 250 to 400°C followed by a second period, with a shorter duration than the one of the first period, during which the fluidization gas is at an at least 100°C lower temperature than the temperature which it has during the first period.

17. Method according to any of the preceding claims, wherein the powder of the alloy based on uranium and comprising molybdenum is a powder of a binary alloy UMo, this alloy having preferably a molybdenum mass content of the binary alloy UMo from 5 to 15%.

18. Method according to any of claims 1 to 16, wherein the powder of the alloy based on uranium and comprising molybdenum is a powder of a ternary alloy UMoX in which X represents a metal other than uranium and molybdenum, preferably selected from titanium, zirconium, chromium, silicon, niobium, platinum, tin, bismuth, ruthenium and palladium.

19. Method according to claim 18, wherein the X mass content of the ternary alloy UMoX is of at most 6%, preferably at most 4%.

20. Method for manufacturing a nuclear fuel, which comprises the implementation of a method for preparing a powder of an alloy based on uranium and comprising molybdenum, in a metastable γ phase, as defined in any of claims 1 to 19.
